## Europäisches Patentamt
## European Patent Office
## Office européen des brevets

(11) Numéro de publication: **0 077 252**
**B1**

(12) **FASCICULE DE BREVET EUROPEEN**

(45) Date de publication du fascicule du brevet:
31.07.85

(21) Numéro de dépôt: **82401801.4**

(22) Date de dépôt: **01.10.82**

(51) Int. Cl.⁴: **H 04 L 5/22**

(54) Procédé de multiplexage temporel d'informations sur un support de transmission et dispositifs pour la mise en oeuvre de ce procédé.

(30) Priorité: **09.10.81 FR 8119081**

(43) Date de publication de la demande:
**20.04.83 Bulletin 83/16**

(45) Mention de la délivrance du brevet:
**31.07.85 Bulletin 85/31**

(84) Etats contractants désignés:
**DE GB IT NL SE**

(56) Documents cités:
ERICSSON REVIEW, vol. 56, no. 2, 1979, pages 72-79, Stockholm, SE. FRIZLEN & WIDL: "10-channel PCM system"
L'ONDE ELECTRIQUE, vol. 55, no. 7, 1975, pages 373-378, Paris, FR. DE LAAGE DE MEUX: "Transmission de données sur groupe secondaire"
CABLES & TRANSMISSION, année 32, no. 4. octobre 1978, - numéro spécial -, pages 632-652, Paris, FR. DUPUY: "Système Transmic. 14. Modem de groupe secondaire"

(73) Titulaire: **LIGNES TELEGRAPHIQUES ET TELEPHONIQUES L.T.T., 1, rue Charles Bourseul, F-78702 Conflans-Ste-Honorine (FR)**

(72) Inventeur: **Cau, Egidio, THOMSON-CSF SCPI 173, bld Haussmann, F-75379 Paris Cedex 08 (FR)**
Inventeur: **Lamiral, Jean-Pierre, THOMSON-CSF SCPI 173, bld Hausmann, F-75379 Paris Cedex 08 (FR)**

(74) Mandataire: **Weinmiller, Jürgen et al, Zeppelinstrasse 63, D-8000 München 80 (DE)**

BUNDESDRUCKEREI BERLIN

## Description

La présente invention a pour objet un procédé de multiplexage temporel d'informations sur un support de transmission, également appelé conduit, notamment destiné aux informations téléphoniques codées selon la technique MIC. Elle a également pour objet des dispositifs de multiplexage et démultiplexage pour la mise en oeuvre de ce procédé.

On rappelle que le multiplexage est un procédé qui permet de faire partager un support, ou conduit, physique unique (câble, faisceau hertzien) à un certain nombre de voies ou canaux d'informations, afin d'abaisser le coût de la transmission par rapport à l'utilisation d'autant de supports que de voies à transmettre.

Il est connu de réaliser un tel multiplexage par répartition de gammes de fréquences entre les différentes voies, à l'intérieur de la bande passante du support; cette solution a été la première technique utilisée avec des dispositifs analogiques. Une solution plus récente consiste à réaliser une répartition dans le temps des différentes voies. Cette technique est notamment utilisée dans le domaine de la téléphonie où elle est associée au codage MIC.

On rapelle qu'on désigne par MIC une modulation par impulsion et codage d'un signal téléphonique; elle consiste à échantillonner le signal analogique à transmettre, puis à quantifier les impulsions qui résultent de cet échantillonnage et, enfin, les coder numériquement; les échantillons numérisés sont transmis, puis décodés à la réception. Lorsqu'on désire multiplexer N voies sur un même support, on réalise l'échantillonnage et le codage successivement des N voies, les N échantillons numériques résultant constituant, avec divers signaux auxiliaires (synchronisation, signalisation, etc.), ce que l'on désigne habituellement par une trame. De plus, on est souvent amené à définir une multitrame, constituée d'une série de M trames, en vue notamment de simplifier la transmission des signaux de signalisation.

Ces techniques ont fait l'objet d'un certain nombre de normalisations internationales, notamment en ce qui concerne le multiplexage temporel de 30 voies sur un support numérique dont le débit est de 2 048 Kbits/s (CCITT, avis G 732).

Par ailleurs, dans certaines applications, il est préférable de réaliser un multiplexage d'un moins grand nombre de voies: en effet, ainsi qu'il est connu, il y a une optimisation à réaliser entre la capacité du système, la distance à parcourir et les besoins locaux; le multiplexage de 10 voies constitue souvent un bon optimum. Il se pose alors le problème de la définition d'une structure de trames et multitrames d'un système à 10 voies multiplexées qui soit compatible avec la structure existante et normalisée à 30 voies: en effet, il est souhaitable de pouvoir réunir trois systèmes 10 voies pour les connecter à un système 30 voies; inversement, il est souhaitable qu'un système 30 voies puisse éclater notamment en systèmes 10 voies, et cela sans que les interfaces n'introduisent trop de complexité et de retard.

Il existe un certain nombre de solutions connues à ce problème, l'une d'elles étant décrite par exemple par Hans Jörg FRIZLEN et Walter WILD (ERICSSON REVIEW N° 2, 1979, pages 72 à 79). Toutefois on constate que leurs performances sont limitées notamment par les retards souvent importants imposés aux signaux en provenance des systèmes 10 voies pour reconstituer une multitrame 30 voies, et inversement, ce qui se traduit également par une complexité et un coût accrus des interfaces.

La présente invention a donc pour objet un procédé de multiplexage de 10 voies, permettant le multiplexage ultérieur de trois systèmes 10 voies afin de constituer un système 30 voies tel que décrit ci-dessus, et réciproquement. A cet effet:

— les trames et multitrames sont de structure identique d'un système 10 voies à l'autre;
— chaque trame 10 voies comporte onze mots de 8 bits, ou IT (Intervalle de Temps), de même longueur, les dix derniers IT portant l'information à transmettre et le premier, dit $IT_0$, les signaux auxiliaires tels que synchronisation, signalisation, etc;
— chaque multitrame comporte le même nombre de trames que le système 30 voies;
— pour chaque multitrame: le mot $IT_0$ de la première trame porte un signal de synchronisation multitrame, et le mot $IT_0$ des trames de rang pair porte un signal de synchronisation de trame, cette répartition conduisant à une bonne sécurité de synchronisation et un temps de reprise de synchronisation minimum;
— les signaux de signalisation sont répartis dans les $IT_0$ des trames restantes selon une structure analogue à celle d'une multitrame 30 voies et, lors du passage de trois systèmes 10 voies à un système 30 voies, les multitrames des différents systèmes 10 voies sont entrelacées pour constituer la multitrame 30 voies, de façon à entraîner un retard minimum.

Plus précisément, l'invention a pour objet un procédé de multiplexage temporel de 30 voies d'informations sur un même support de transmission, dans lequel les informations à transmettre sont codées sous de mots binaires, réunis en trames et multitrames, une trame comportant une série de mots binaires représentant les informations à transmettre et des bits auxiliaires représentant au moins des informations de synchronisation et de signalisation, une multitrame comportant une série de trames successives, ledit procédé étant caractérisé par le fait qu'à chacune des 30 voies correspond une voie d'un parmi trois systèmes de N = 10 voies selon le tableau ci-dessous:

| | N° de voie d'un système à 10 voies | | | | | | | | | |
|---|---|---|---|---|---|---|---|---|---|---|
| | 1 | 2 | 3 | 4 | 5 | 6 | 7 | 8 | 9 | 10 |
| **N° de voie d'un système à 30 voies** | | | | | | | | | | |
| 1er système 10 voies | 1 | 4 | 7 | 10 | 13 | 16 | 19 | 22 | 25 | 28 |
| 2e système 10 voies | 2 | 5 | 8 | 11 | 14 | 17 | 20 | 23 | 26 | 29 |
| 3e système 10 voies | 3 | 6 | 9 | 12 | 15 | 18 | 21 | 24 | 27 | 30 |

que, pour chaque système 10 voies, chaque trame comporte 11 mots binaires de même longueur, seul le premier d'entre eux comprenant les bits auxiliaires, les mots suivants représentant respectivement un échantillon codé des informations à transmettre sur chacune des voies; et que pour chaque multitrame, le premier mot des trames de rang pair porte les informations de synchronisation, les informations de signalisation des voies étant portées par le premier mot des trames de rang impair et étant regroupées deux par deux, de la forme $S_i$ et $S_{i+(N/2)}$ si S désigne l'information de signalisation et i le rang de la voie à laquelle il se rapporte.

L'invention a également pour objet un dispositif de multiplexage pour la mise en oeuvre du procédé assurant le multiplexage de trois systèmes 10 voies pour former un système 30 voies, caractérisé par le fait qu'il comporte, pour chacun des systèmes 10 voies, des moyens de détection des informations trame et multitrame et de génération d'un signal de synchronisation trame, et des moyens d'extraction et de mémorisation d'une part des informations de synchronisation et d'autre part des informations à transmettre; le dispositif comportant en outre des moyens de mise en phase des multitrames des trois systèmes 10 voies, auxquels sont reliés les moyens d'extraction précédents, et un circuit constituant une base de temps fournissant, à partir de signaux d'horloge et de synchronisation d'un système 30 voies, des signaux de synchronisation au reste du dispositif, assurant le séquencement des informations des trois systèmes 10 voies pour former le système 30 voies.

L'invention a également pour objet un dispositif de démultiplexage pour la mise en oeuvre du procédé assurant le démultiplexage d'un système 30 voies pour former trois systèmes 10 voies, caractérisé par le fait qu'il comporte:

— des moyens de détection des informations de synchronisation trame et multitrame;
— des moyens d'extraction d'une part des informations de signalisation et d'autre part des informations à transmettre;
— deux circuits d'aiguillage, recevant respectivement les informations de signalisation et les informations à transmettre des moyens précédents;
— des moyens d'élaboration des informations de synchronisation trame et multitrame des systèmes 10 voies;
— un circuit constituant une base de temps, fournissant, à partir de l'information de synchronisation trame et de la fréquence correspondant au débit du support, des signaux de synchronisation au reste du dispositif et assurant le séquencement des informations fournies.

L'invention sera mieux comprise à l'aide de la description suivante donnée à titre d'exemple et illustrée par les dessins annexés, sur lesquels:
la figure 1 représente la structure de trames et multitrames d'un système 30 voies tel que normalisé;
la figure 2 représente une structure de trames et multitrames d'un système 10 voies selon l'invention;
la figure 3 représente un mode de réalisation d'un multiplexeur 10 voies selon l'invention;
la figure 4 représente un mode de réalisation d'un démultiplexeur 10 voies selon l'invention;
la figure 5 représente un mode de réalisation d'un multiplexeur 3 fois 10 voies selon l'invention;
la figure 6 représente un mode de réalisation d'un démultiplexeur 3 fois 10 voies selon l'invention.
Sur ces différentes figures, les mêmes références se rapportent aux mêmes éléments.

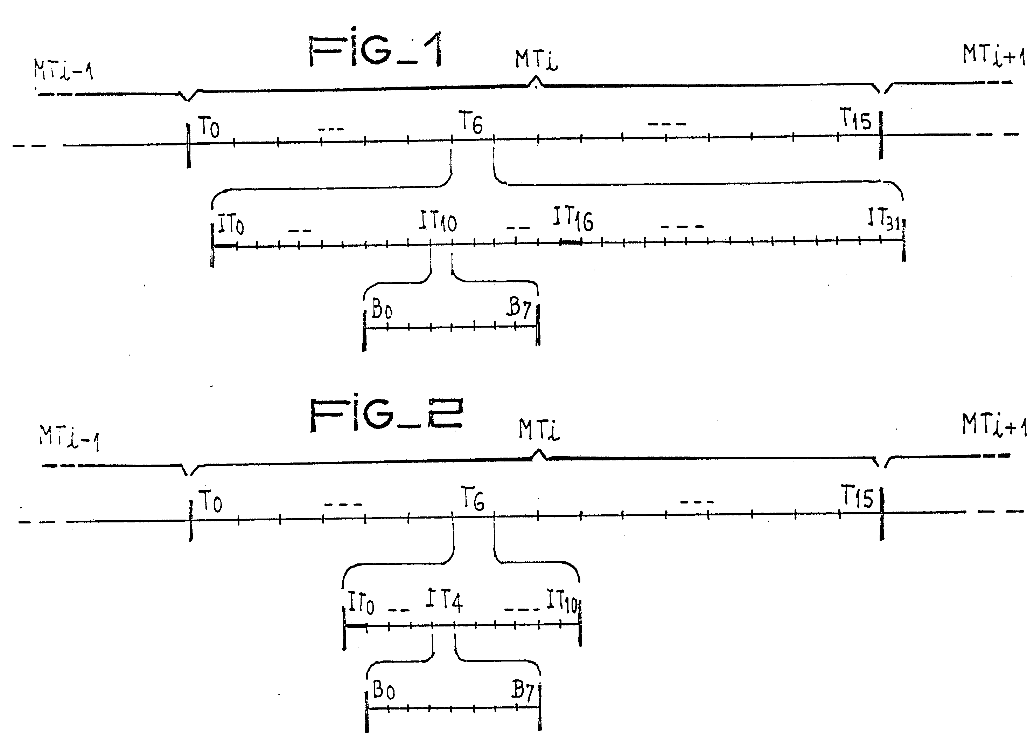

La figure 1 représente donc la suite dans le temps de trois multitrames: $MT_{i-1}$, $MT_i$ et $MT_{i+1}$, représentant le multiplexage de 30 voies.

Chaque multitrame est constituée, comme détaillé pour la multitrame $MT_i$, de 16 trames, notées $T_0 \ldots T_{15}$, successives et de structure identique.

Chacune des trames est constituée, comme représenté pour la trame $T_6$ sur la figure, par 32 intervalles de temps, notés $IT_0 \ldots IT_{31}$, de même durée.

Parmi ces intervalles de temps, trente d'entre eux, à savoir $IT_1$ à $IT_{15}$ et $IT_{17}$ à $IT_{31}$, sont affectés à la

3

transmission des informations; ils se composent de 8 bits chacun, comme représenté pour $IT_{10}$, les bits étant notés $B_0 \ldots B_7$. Comme il a été dit ci-dessus, dans le cas d'une transmission téléphonique, chacun de ces mots de 8 bits représente le codage numérique d'un échantillon du signal à transmettre sur l'une des 30 voies multiplexées, une trame comportant donc l'ensemble des 30 mots. Bien entendu, ces IT peuvent être affectés à la transmission d'autres informations que téléphoniques, telles que des informations binaires transmises entre calculateurs.

Les deux intervalles de temps restants, $IT_0$ et $IT_{16}$, indiqués en trait fort sur la figure, sont affectés à des informations auxiliaires: de synchronisation (trame et multitrame), de signalisation (de chacune des 30 voies), ainsi que de service (également appelées »réserves«) et de données transmises en basse vitesse. L'intervalle $IT_{16}$, plus particulièrement affecté à la signalisation, est détaillé ci-dessous (Tableau I).

Ainsi qu'il est connu, la fréquence maximum qui est transmise sur une voie téléphonique est de 3400 Hz, ce qui conduit à adopter une fréquence d'échantillonnage du signal analogique à transmettre de 8 KHz, donc une durée de 125 μs pour chacune des trames, étant donné que chacune des voies multiplexées est échantillonnée une fois à chaque trame. La multitrame de 16 trames a donc une durée de 2 ms. La trame de 125 μs étant constituée par 32 intervalles de temps de 8 bits chacun, on en déduit un débit du support de

$$\frac{8 \times 32}{125.10^{-6}} \text{ soit } 2048 \text{ Kbits/s}.$$

Le tableau I ci-après décrit le contenu de l'intervalle de temps $IT_{16}$ de chacune des trames constituant une multitrame du système 30 voies de la figure 1.

Tableau I

Multitrame 30 voies

| N° de Trame | Contenu de $IT_{16}$ | | | | | | | |
|---|---|---|---|---|---|---|---|---|
| | $B_0$ | $B_1$ | $B_2$ | $B_3$ | $B_4$ | $B_5$ | $B_6$ | $B_7$ |
| $T_0$ | | VMT | | | R | A | R | R |
| $T_1$ | | $S_1$ | | | | $S_{16}$ | | |
| $T_2$ | | $S_2$ | | | | $S_{17}$ | | |
| $T_3$ | | $S_3$ | | | | $S_{18}$ | | |
| $T_4$ | | $S_4$ | | | | $S_{19}$ | | |
| $T_5$ | | $S_5$ | | | | $S_{20}$ | | |
| $T_6$ | | $S_6$ | | | | $S_{21}$ | | |
| $T_7$ | | $S_7$ | | | | $S_{22}$ | | |
| $T_8$ | | $S_8$ | | | | $S_{23}$ | | |
| $T_9$ | | $S_9$ | | | | $S_{24}$ | | |
| $T_{10}$ | | $S_{10}$ | | | | $S_{25}$ | | |
| $T_{11}$ | | $S_{11}$ | | | | $S_{26}$ | | |
| $T_{12}$ | | $S_{12}$ | | | | $S_{27}$ | | |
| $T_{13}$ | | $S_{13}$ | | | | $S_{28}$ | | |
| $T_{14}$ | | $S_{14}$ | | | | $S_{29}$ | | |
| $T_{15}$ | | $S_{15}$ | | | | $S_{30}$ | | |

4

Dans ce tableau, on a désigné par VMT un ensemble de quatre bits de synchronisation de la multitrame, l'information de synchronisation de trame étant contenue dans $IT_0$, par R un bit de réserve, ou de service, par A un bit d'alarme relatif à la multitrame, et par $S_i$, avec i allant de 1 à 30, une information de signalisation de la voie i, exprimée sur 4 bits. Il est à noter que les 4 bits de signalisation peuvent être liés par un codage, pour former un mot, ou être indépendants; dans ce dernier cas, ils définissent quatre canaux de transmission de la voie de signalisation i, notés couramment a, b, c et d.

Il ressort de ce tableau que la signalisation est portée par l'intervalle de temps $IT_{16}$ seulement à partir de la trame $T_1$ et que les voies sont divisées en deux groupes de 15 voies chacun, la trame $T_1$ portant la signalisation des voies 1 et 16, la trame $T_2$ des voies 2 et 17, etc ... jusqu'à la trame $T_{15}$ qui porte la signalisation des dernières voies des deux groupes, à savoir $S_{15}$ et $S_{30}$.

La figure 2 définit, de façon analogue à la figure 1, la structure de la multitrame et de la trame selon l'invention, permettant le multiplexage de 10 voies.

On a donc représenté la succession dans le temps de trois multitrames $MT_{i-1}$, $MT_i$ et $MT_{i+1}$. Chacune des multitrames, comme représenté pour $MT_i$ sur la figure 2, est composée de 16 trames, notées $T_0 ... T_{15}$, identiques entre elles, de durée égale à 125 µs, la multitrame de ce système étant donc identique à la multitrame du système 30 voies de la figure 1.

Chacune des trames sur la figure 2, comme représenté pour la trame $T_6$, est constituée seulement de 11 intervalles de temps; dix d'entre eux ($IT_1$ à $IT_{10}$) sont affectés respectivement aux 10 voies à multiplexer et sont constitués, comme les intervalles de temps du système 30 voies, par des mots de 8 bits ($B_0 ... B_7$) représentant le codage numérique d'un échantillon du signal à transmettre sur la voie considérée. Le premier des intervalles de temps de chacune des trames, noté $IT_0$ et représenté en trait fort sur la figure, remplit les fonctions auxiliaires à la fois de l'$IT_0$ et de l'$IT_{16}$ du système 30 voies, à savoir synchronisation trame, synchronisation multitrame, signalisation, etc.

Dans ce système, la durée d'un intervalle de temps est environ de 11,36 µs et le débit du support sur lequel ces infomations sont multiplexées est donc de

$$\frac{8 \times 11}{125.10^{-6}} \text{ soit } 704 \text{ Kbits/s}.$$

Le contenu de l'intervalle $IT_0$ est donné dans le tableau II ci-après pour chacune des trames constituant une multitrame.

Tableau II

Multitrame 10 voies

| N° de trame | Contenu de $IT_0$ | | | | | | | |
|---|---|---|---|---|---|---|---|---|
| | $B_0$ | $B_1$ | $B_2$ | $B_3$ | $B_4$ | $B_5$ | $B_6$ | $B_7$ |
| $T_0$ | ←——— (VMT) ———→ | | | | R | R | R | R |
| $T_1$ | * | ←————————— (VT) —————————→ | | | | | | |
| $T_2$ | ←——— ($S_1$) ———→ | | | ←——— ($S_6$) ———→ | | | | |
| $T_3$ | * | ←————————— (VT) —————————→ | | | | | | |
| $T_4$ | ←——— ($S_2$) ———→ | | | ←——— ($S_7$) ———→ | | | | |
| $T_5$ | * | ←————————— (VT) —————————→ | | | | | | |
| $T_6$ | Z | Z | Z | I | Z | Z | Z | Z |
| $T_7$ | * | ←————————— (VT) —————————→ | | | | | | |
| $T_8$ | ←——— ($S_3$) ———→ | | | ←——— ($S_8$) ———→ | | | | |
| $T_9$ | * | ←————————— (VT) —————————→ | | | | | | |
| $T_{10}$ | ←——— ($S_4$) ———→ | | | ←——— ($S_9$) ———→ | | | | |

Suite

| N° de trame | Contenu de $IT_0$ | | | | | | | |
|---|---|---|---|---|---|---|---|---|
| | $B_0$ | $B_1$ | $B_2$ | $B_3$ | $B_4$ | $B_5$ | $B_6$ | $B_7$ |
| $T_{11}$ | * | ← ——————— (VT) ——————— → | | | | | | |
| $T_{12}$ | Z | Z | Z | I | Z | Z | Z | Z |
| $T_{13}$ | * | ← ——————— (VT) ——————— → | | | | | | |
| $T_{14}$ | ← —— $(S_5)$ —— → | | | | ← —— $(S_{10})$ —— → | | | |
| $T_{15}$ | * | ← ——————— (VT) ——————— → | | | | | | |

Il ressort de ce tableau que l'$IT_0$ de la première ($T_0$) porte la synchronisation de la multitrame par un mot de synchronisation de quatre bits, noté symboliquement VMT comme précédemment et qui peut être par exemple égal à 0000; les quatre derniers bits de l'$IT_0$ de cette première trame sont par exemple affectés à des bits de service, notés R, correspondant à ceux du système 30 voies.

La seconde trame ($T_1$) et toutes les trames de rang impair qui suivant sont affectées à la synchronisation de trame. A cet effet, après un bit libre (noté par *), on trouve un mot de sept bits noté symboliquement VT et qui peut avoir par exemple la forme suivante: 0011011.

Les trames de rang impair suivantes sont affectées, aussi symétriquement que possible, soit à la signalisation, notée S, soit à la transmission de données basse vitesse, notées Z. Plus précisément, la trame $T_2$ transmet sur quatre bits pour chacune des voies la signalisation des voies 1 et 6, la trame $T_4$ celle des voies 2 et 7, la trame $T_8$ celle des voies 3 et 8 etc. jusqu'à la trame $T_{14}$ celle des voies 5 et 10. On constate que de façon tout à fait analogue à la multitrame 30 voies, les trames sont divisées ici en deux séries et la signalisation est transmise parallèlement pour les deux séries. Les trames restantes, à savoir $T_6$ et $T_{10}$ transmettent donc des données basse vitesse Z; l'un toutefois des bits de l'$IT_0$ correspondant ($B_3$) porte une information telle qu'il n'y ait pas de risque de confusion avec le mot de synchronisation de multitrame (VMT); dans le cas simple où VMT = 0000, il suffit d'imposer l'un des bits $B_0$ à $B_3$ égal à 1.

Le tableau III ci-après représente la correspondance retenue entre chacune des voies d'un système à 30 voies et chacune des voies de trois systèmes à 10 voies. Il est à noter que dans ce tableau, on a indiqué les numéros des voies des systèmes concernés et non les numéros d'IT.

Tableau III

| | N° de voie d'un système à 10 voies | | | | | | | | | |
|---|---|---|---|---|---|---|---|---|---|---|
| | 1 | 2 | 3 | 4 | 5 | 6 | 7 | 8 | 9 | 10 |
| N° de voie d'un système à 30 voies | | | | | | | | | | |
| 1er système 10 voies | 1 | 4 | 7 | 10 | 13 | 16 | 19 | 22 | 25 | 28 |
| 2e système 10 voies | 2 | 5 | 8 | 11 | 14 | 17 | 20 | 23 | 26 | 29 |
| 3e système 10 voies | 3 | 6 | 9 | 12 | 15 | 18 | 21 | 24 | 27 | 30 |

Il apparaît la correspondance suivante:

— la voie 1 du premier système 10 voies correspond à la voie 1 du système 30 voies;
— la voie 1 du deuxième système 10 voies correspond à la voie 2 du système 30 voies;
— la voie 1 du troisième système 10 voies correspond à la voie 3 du système 30 voies;
— la voie 2 du premier système 10 voies correspond à la voie 4 du système 30 voies; etc.

Cela revient à dire que les systèmes 10 voies sont entrelacés, ce qui permet de réduire dans de grandes proportions le retard introduit par le passage 10 voies/30 voies, ainsi que le montre le tableau IV ci-après. En effet, d'autres configurations sont possibles, notamment comme décrit dans les articles mentionnés plus haut, dans lesquels les systèmes 10 voies sont placés l'un à côté de l'autre, c'est-à-dire les 10 voies du premier système correspondant aux dix premières voies du système 30 voies, les dix voies du second système aux dix suivantes (11 à 20) du système 30 voies, etc. Comme il est mentionné ci-dessus, un tel système a notamment pour inconvénient d'imposer un retard assez important au moment du passage 10 voies/30 voies.

Le tableau IV ci-après, établi à partir des tableaux II et III précédents, représente pour chacune des trames des trois systèmes 10 voies, l'intervalle de temps $IT_0$ qui contient notamment les signaux de signalisation, et la correspondance dans le temps de ces trames avec celle d'un système 30 voies pour lequel on a représenté l'intervalle de temps $IT_{16}$; ce tableau est fait en supposant que les multitrames des systèmes 10 voies sont synchronisées, c'est-à-dire que les trois origines coincident dans le temps.

Tableau IV

| Systèmes 10 voies | | | | | Système 30 voies | | |
|---|---|---|---|---|---|---|---|
| n° multitrame | n° trame | $IT_0$ 1er système | $IT_0$ 2e système | $IT_0$ 3e système | $IT_{16}$ | n° trame | n° multitrame |
| | $T_0$ | $VMT \cdot R$ | $VMT \cdot R$ | $VMT \cdot R$ | $S_{15} \cdot S_{30}$ | $T_{15}$ | i−1 |
| | $T_1$ | VT | VT | VT | $VMT \cdot RA$ | $T_0$ | |
| | $T_2$ | $S_1 \cdot S_{16}$ | $S_2 \cdot S_{17}$ | $S_3 \cdot S_{18}$ | $S_1 \cdot S_{16}$ | $T_1$ | |
| | $T_3$ | VT | VT | VT | $S_2 \cdot S_{17}$ | $T_2$ | |
| | $T_4$ | $S_4 \cdot S_{19}$ | $S_5 \cdot S_{20}$ | $S_6 \cdot S_{21}$ | $S_3 \cdot S_{18}$ | $T_3$ | |
| | $T_5$ | VT | VT | VT | $S_4 \cdot S_{19}$ | $T_4$ | |
| | $T_6$ | Z | Z | Z | $S_5 \cdot S_{20}$ | $T_5$ | |
| | $T_7$ | VT | VT | VT | $S_6 \cdot S_{21}$ | $T_6$ | |
| i | $T_8$ | $S_7 \cdot S_{22}$ | $S_8 \cdot S_{23}$ | $S_9 \cdot S_{24}$ | $S_7 \cdot S_{22}$ | $T_7$ | i |
| | $T_9$ | VT | VT | VT | $S_8 \cdot S_{23}$ | $T_8$ | |
| | $T_{10}$ | $S_{10} \cdot S_{25}$ | $S_{11} \cdot S_{26}$ | $S_{12} \cdot S_{27}$ | $S_9 \cdot S_{24}$ | $T_9$ | |
| | $T_{11}$ | VT | VT | VT | $S_{10} \cdot S_{25}$ | $T_{10}$ | |
| | $T_{12}$ | Z | Z | Z | $S_{11} \cdot S_{26}$ | $T_{11}$ | |
| | $T_{13}$ | VT | VT | VT | $S_{12} \cdot S_{27}$ | $T_{12}$ | |
| | $T_{14}$ | $S_{13} \cdot S_{28}$ | $S_{14} \cdot S_{29}$ | $S_{15} \cdot S_{30}$ | $S_{13} \cdot S_{28}$ | $T_{13}$ | |
| | $T_{15}$ | VT | VT | VT | $S_{14} \cdot S_{29}$ | $T_{14}$ | |
| | $T_0$ | $VMT \cdot R$ | $VMT \cdot R$ | $VMT \cdot R$ | $S_{15} \cdot S_{30}$ | $T_{15}$ | |
| i + 1 | $T_1$ | VT | VT | VT | $VMT \cdot RA$ | $T_0$ | i + 1 |
| | — | | | | — | | |

Comme on peut le constater en se reportant directement aux trames $T_2$ des systèmes 10 voies, on dispose simultanément de la signalisation des voies 1, 16, 2, 17, 3 et 18 qui, comme la colonne $IT_{16}$ le fait ressortir, sont les signaux de signalisation nécessaires aux trames $T_1$, $T_2$ et $T_3$ du système 30 voies. Il en résulte que les signaux de signalisation contenus dans les trames $T_2$ des systèmes 10 voies sont transmis dans les trames $T_1$, $T_2$, $T_3$ du système 30 voies sans retard pour $S_1$ et $S_{16}$ ($T_1$), avec une trame de retard pour $S_2$ et $S_{17}$ ($T_2$) et deux trames de retard pour $S_3$ et $S_{18}$ ($T_3$). La trame suivante ($T_3$) des systèmes 10 voies n'est utilisée qu'à la synchronisation trame, qui est propre au système 10 voies; pendant cette période, le système 30 voies continue d'exploiter la signalisation fournie précédemment par les systèmes 10 voies. La trame suivante ($T_4$) des systèmes 10 voies fournit à nouveau six signaux de signalisation qui seront exploités dans les trames $T_4$ à $T_6$ du système 30 voies. Il apparaît 1 à un retard de une à trois trames du système 30 voies sur les systèmes 10 voies. Pendant que le système 30 voies élabore ses trames $T_4$, $T_5$ et $T_6$, les systèmes 10 voies utilisent les $IT_0$ à la synchronisation trame ($T_5$ et $T_7$) et à la transmission des données basse vitesse Z ($T_6$). Pour la trame $T_8$ du système 10 voies, on se retrouve dans une situation analogue à celle de la trame $T_2$ où les systèmes 10 voies fournissent la signalisation nécessaire aux trois trames suivantes du système 30 voies ($T_7$ à $T_9$). De même en ce qui concerne les trois trames $T_{10}$ des systèmes 10 voies avec les trames $T_{10}$ à $T_{12}$ du système 30 voies. Les trois trames $T_{14}$ des systèmes 10 voies fournissent les signaux nécessaires aux trois dernières trames de la multitrame 30 voies, la trame $T_{15}$ du système 30 voies étant alors en synchronisme avec la trame $T_0$ de la multitrame suivante (i + 1) des systèmes 10 voies, les trames $T_0$ des systèmes 10 voies étant inutiles pour la signalisation du système 30 voies. Les trames $T_1$ des systèmes 10 voies sont en synchronisme avec la trame $T_0$ du système 30 voies, aucune ne contenant de signaux de signalisation.

Il apparaît donc que le retard, dans le sens multiplexage de trois systèmes 10 voies en un système 30 voies, évolue entre 0 et 3 trames, la valeur moyenne se situant entre une et deux trames ; ce résultat est nettement meilleur que celui des systèmes connus et il est lié à la répartition de la signalisation dans les différentes trames des systèmes 10 voies.

Il est bien entendu possible d'établir un tableau analogue dans le sens démultiplexage d'un système 30 voies vers trois systèmes 10 voies. Ce tableau ferait apparaître un retard évoluant de la même manière entre 0 et 3, de façon complémentaire.

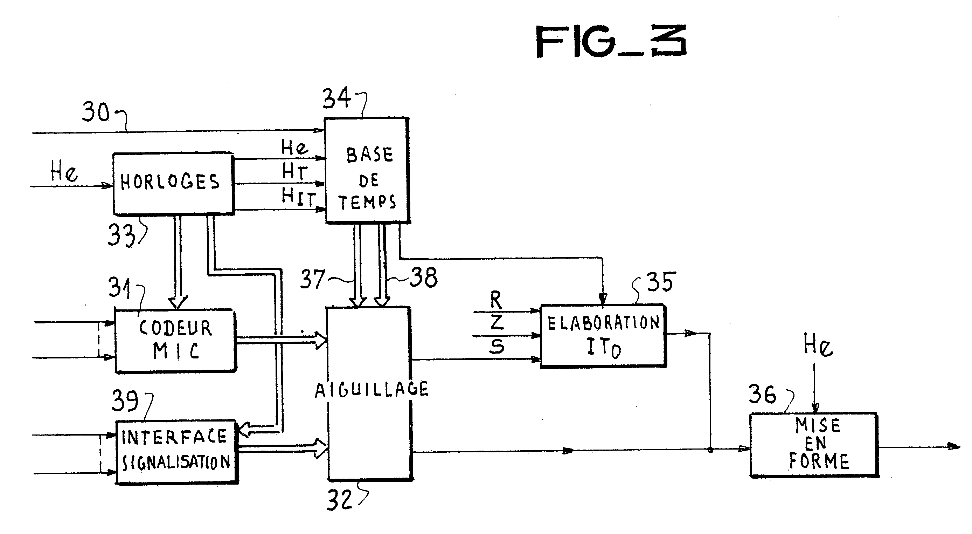

La figure 3 représente un multiplexeur 10 voies pour la mise en oeuvre du procédé selon l'invention, recevant 10 voies en parallèle et fournissant en série une multitrame telle que précédemment décrite.

Sur cette figure, on a représenté principalement: un codeur 31, recevant les 10 voies d'informations, par exemple téléphoniques, le codeur réalisant dans ce cas un codage MIC; un ensemble d'horloges 33, recevant une fréquence $H_e$ correspondant au débit du support (dans l'exemple numérique ci-dessus: 704 KHz), qui peut soit être engendrée un générateur interne, soit être récupérée à partir des signaux reçus; un dispositif 35 d'élaboration des intervalles de temps $IT_0$ de chaque trame, et un circuit de base de temps 34.

Les horloges du circuit 33 ont pour fonction d'engendrer à partir de la fréquence $H_e$ une fréquence $H_T$ représentant la fréquence de trame, égale à 8 KHz dans l'exemple numérique précédent, et une fréquence correspondant à la succession des intervalles de temps IT, notée $H_{IT}$ et égale à 88 KHz, toujours dans l'exemple numérique précédent. Ces signaux d'horloge sont fournis à la base de temps 34, au codeur 31 et à une interface 39.

La base de temps 34 est un ensemble de circuits logiques recevant les différentes fréquences $H_e$, $H_T$ et $H_{IT}$ ainsi qu'un signal d'initialisation (connexion 30) et fournissant:

— un signal de synchronisation de début de trame au circuit 35 d'élaboration d'$IT_0$;
— sur un bus 37 de 10 bits parallèles, des signaux d'adressage des 10 voies, séquencés dans le temps;
— sur un bus 38 parallèle de 5 bits, des signaux d'adressage de signalisation.

Ces deux derniers bus (37, 38) sont dirigés vers un circuit d'aiguillage 32 qui reçoit par ailleurs, d'une part fournies par le codeur 31 en parallèle, 10 connexions portant respectivement les informations des 10 voies, sous forme de mots de 8 bits pour chaque voie, et d'autre part 10 connexions de signalisation portant respectivement la signalisation des mêmes 10 voies, en mots de 4 bits pour chaque voie, d'une interface 39. Le dispositif d'aiguillage 32 fournit en série les informations à émettre, séquencées par la base de temps 34, à un dispositif de mise en forme 36 qui reçoit par ailleurs la fréquence $H_e$ et fournit sur sa sortie la trame à émettre sur un support de transmission.

Parallèlement, le dispositif d'aiguillage en série les signaux S de signalisation des 10 voies, sur commande de la base de temps 34, au circuit 35 d'élaboration d'$IT_0$. Celui-ci reçoit par ailleurs les bits de réserve (R) et les informations numériques basse vitesse (Z) qui doivent être contenues dans les $IT_0$. Ce circuit est constitué à partir de multiplexeurs standards et fournit les $IT_0$ sur commande de la base de temps 34 tels que définis par le tableau II. Le circuit 35 fournit au dispositif 36 les $IT_0$ convenablement séquencés par rapport aux données fournies par le circuit d'aiguillage 32 directement au dispositif de mise en forme 36.

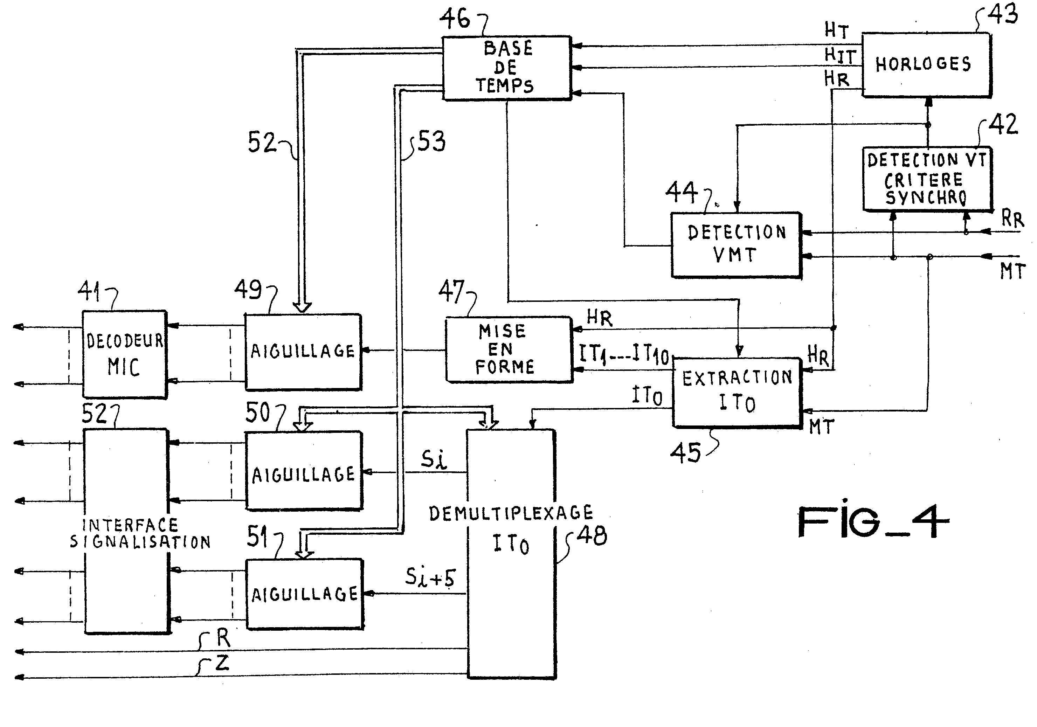

La figure 4 représente un dispositif démultiplexeur pour la mise en oeuvre du procédé selon l'invention, recevant une multitrame 10 voies telle que définie plus haut et fournissant 10 voies d'informations avec leurs signalisations associées.

Ce dispositif reçoit donc la multitrame MT d'un système 10 voies, exprimée en binaire, et le rythme récupéré $R_R$. Ils sont transmis d'une part à un circuit 42 qui détecte le motif de synchronisation VT de chaque trame et décide, en fonction d'un critère de synchronisation donné, d'une éventuelle reprise de synchronisation, ainsi qu'il est connu notamment du brevet n° 8 102 412 déposé au nom de LTT; il fournit à cet effet une impulsion de synchronisation par exemple à la fréquence trame. Un circuit 44 assure d'autre part la détection de la synchronisation multitrame (VMT) sur réception du rythme $R_R$ et de la multitrame MT, ainsi que de l'impulsion de synchronisation émanant du circuit 42. Le circuit 42 envoie cette même impulsion, à la fréquence trame, à un ensemble d'horloges 43 qui délivre d'une part un signal d'horloge $H_R$ à la fréquence correspondant au débit de la ligne, c'est-à-dire 704 KHz dans l'exemple numérique précédent, et d'autre part deux signaux d'horloge $H_T$ et $H_{IT}$ représentant respectivement la fréquence trame et la fréquence des intervalles de temps IT.

Un ensemble de circuits logiques constituant une base de temps 46 reçoit d'une part le signal de synchronisation de début de multitrame fourni par le circuit 44 et d'autre part les fréquences $H_T$ et $H_{IT}$ fournies par les horloges 43; il fournit différents signaux logiques dans le temps qui sont:

— une impulsion de synchronisation de début de trame à un circuit 45 d'extraction de l'$IT_0$ de chaque trame;
— sur un bus parallèle 10 bits (52), l'adressage temporel des différentes voies;
— sur un bus parallèle 5 bits (53), l'adressage temporel de la signalisation.

Le circuit 45 d'extraction d'$IT_0$ reçoit d'une part la multitrame MT et d'autre part la fréquence $H_R$ et fournit en conséquence d'une part l'$IT_0$ de chaque trame, sous forme de 8 bits en série, à un dispositif (48) de démultiplexage de l'$IT_0$ et d'autre part les autres IT ($IT_1$ à $IT_{10}$), qui représentent chacun le codage d'un échantillon de l'information circulant sur une des 10 voies multiplexées, à un circuit 47 de mise en forme, qui reçoit par ailleurs la fréquence $H_R$ et qui fournit ces IT en série à un dispositif d'aiguillage 49 qui, recevant par ailleurs l'adressage des voies (bus 52) fournit en sortie les 10 voies en parallèle.

L'$IT_0$ fourni par le circuit 45 est démultiplexé par un circuit 48, sur commande du bus 53 de la base de temps 46, c'est-à-dire que le circuit 48 fournit la signalisation $S_i$ d'une trame i à un circuit d'aiguillage 50 en même temps que la signalisation $S_{i+5}$ de la trame i + 5 à un circuit d'aiguillage 51 et, éventuellement, les bits de service R et les données numériques Z.

Les circuits d'aiguillages 50 et 51 ont cinq sorties chacun et démultiplexent la signalisation reçue ($S_i$ et $S_{i+5}$) sur commande du bus 53 de la base de temps 46.

Le dispositif d'aiguillage 49 fournit les informations démultiplexées à un décodeur 41, par exemple du type MIC, qui restitue alors les 10 voies téléphoniques. Parallèlement, les dispositifs d'aiguillage 50 et 51 fournissent les signaux de signalisation à une interface 52.

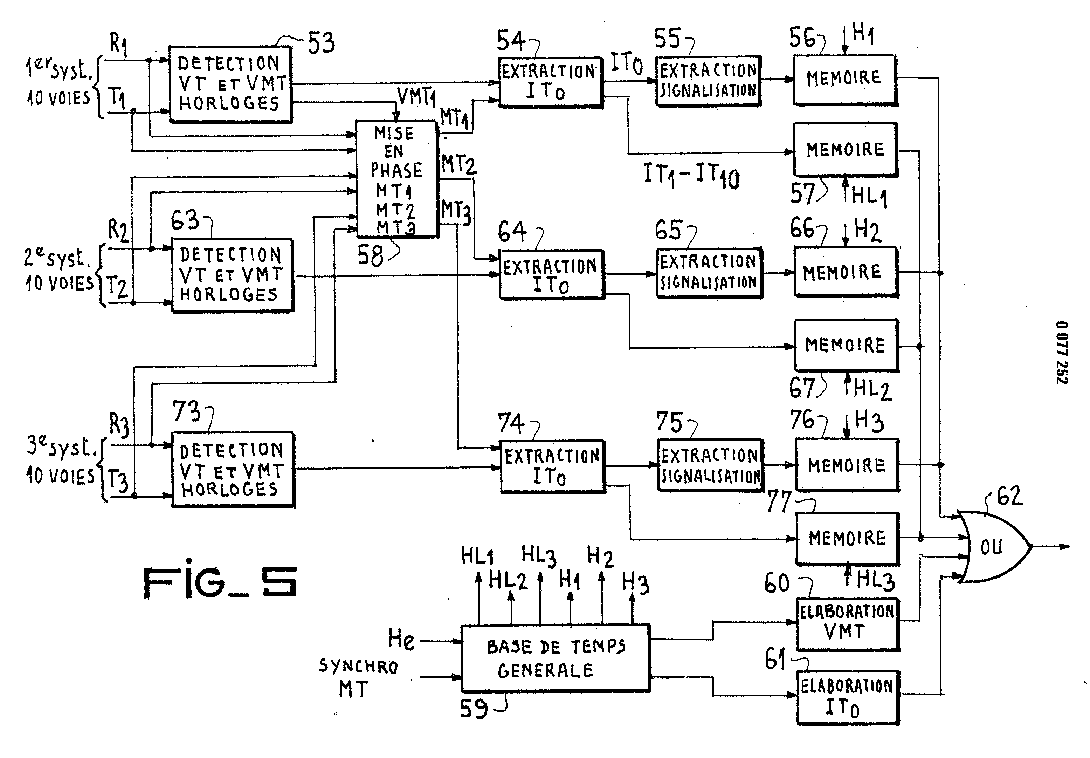

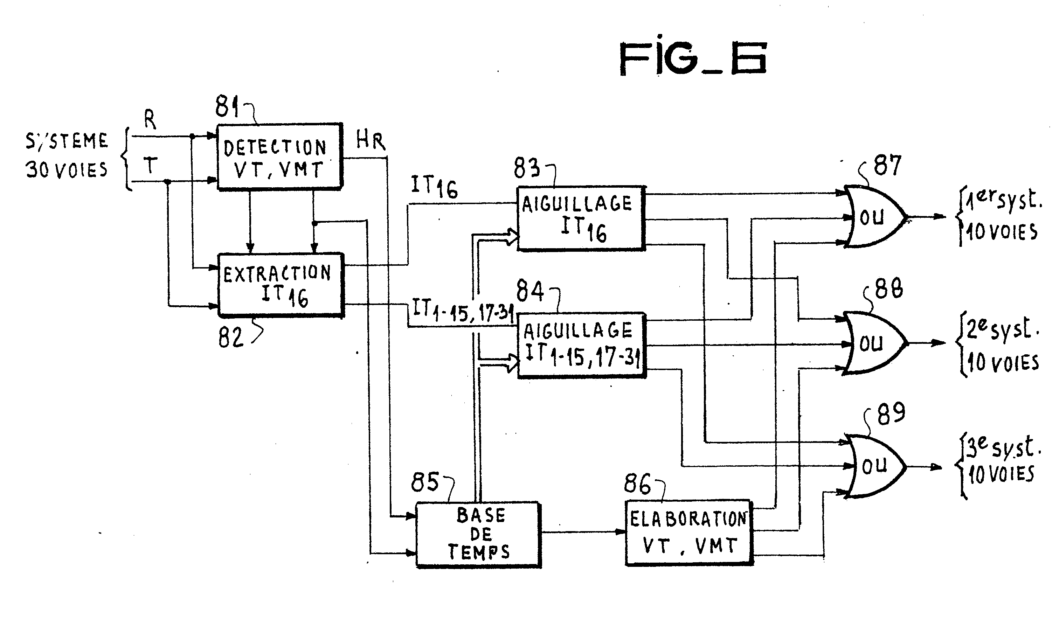

La figure 5 représente un mode de réalisation d'un multiplexeur trois fois 10 voies.

Chacune de ces 10 voies est représentée par deux signaux: la suite des trames $T_i$, exprimées en binaire, et son rythme associé récupéré $R_i$, avec i = 1, 2 ou 3 respectivement des trois systèmes.

Pour le premier système 10 voies ($T_1$, $R_1$), on opère une détection des motifs de synchronisation trame (VT) et multitrame (VMT) à l'aide d'un circuit 53, analogue à l'ensemble des circuits 42, 43 et 44 de la figure 4, permettant l'extraction de l'$IT_0$ (circuit 54), puis l'extraction des signaux de signalisation (circuit 55), conformément au tableau II précédent. A la sortie du circuit 54 sont également disponibles, sur une autre connexion, les autres IT ($IT_1$ à $IT_{10}$).

Aussi bien les informations que les signaux de signalisation doivent être stockés temporairement dans des mémoires tampons, du type FIFO (pour »First In First Out«, c'est-à-dire » premier entré premier sorti«), repérées 56 pour $IT_0$ et 57 pour les autres IT, pour constituer la multitrame 30 voies comme décrit au tableau IV.

De la même manière pour les deuxième et troisième systèmes, sont prévus des circuits respectivement 63 à 67 et 73 à 77 analogues aux circuits 53 à 57.

En outre, les trois systèmes 10 voies étant indépendants les uns des autres, il est nécessaire de procéder à une mise en phase des multitrames, ce qui se fait à l'aide de mémoires tampons dans un circuit 58, qui reçoit d'une part les infomations $R_i$, $T_i$ et d'autre part un signal de synchronisation de multitrame de l'un des systèmes, par exemple sur la figure 5, du premier système. Ce circuit 58 fournit les multitrames $MT_1$, $MT_2$ et $MT_3$ aux circuits d'extraction des $IT_0$, respectivement 54, 64 et 74.

Enfin, le dispositif comporte une base de temps générale 59 qui reçoit un signal d'horloge $H_e$ à la fréquence d'émission du système 30 voies (2048 KHz dans l'exemple numérique précédent) et un signal d'initialisation ou de synchronisation multitrame 30 voies. La base de temps 59 délivre, séquencés dans le temps:

— des signaux $H_1$, $H_2$, $H_3$ aux mémoires 56, 66 et 76 qui assurent le séquencement des informations de signalisation destinées à former l'$IT_{16}$ de la trame 30 voies;
— des signaux $HL_1$, $HL_2$, $HL_3$ aux mémoires 57, 67 et 77, assurant le séquencement des informations correspondant aux $IT_1$ à $IT_{15}$ et $IT_{17}$ à $IT_{31}$;
— un signal de synchronisation multitrame 30 voies vers un circuit 60 d'élaboration du motif de synchronisation VMT 30 voies, complétant l'$IT_{16}$ 30 voies;

— un signal de synchronisation des trames 30 voies vers un circuit 61 d'élaboration de l'$IT_0$ 30 voies.

Les signaux issus respectivement des circuits 56–66, 57–67, 60 et 61 sont réunis par exemple par un circuit assurant la fonction logique OU, repéré 62, afin de former la trame 30 voies, ce circuit 62 étant éventuellement suivi par un dispositif de mise en forme, non représenté.

La figure 6 représente un mode de réalisation d'un démultiplexeur trois fois 10 voies.

Le système 30 voies est, comme précédemment, représenté par la suite des trames T, exprimées en binaire, et son rythme associé récupéré R.

On opère à l'aide d'un circuit 81 la détection des motifs de synchronisation trame (VT) et multitrame (VMT). Ce circuit 81 fournit un signal $H_R$ correspondant au débit de la ligne 10 voies (dans l'exemple numérique précédent, 70 KHz) ainsi que des signaux de synchronisation trame et multitrame. Ces derniers sont dirigés, ainsi que les informations R et T, vers un circuit 82 assurant l'extraction de l'$IT_{16}$ de la trame 30 voies, dirigé vers un dispositif d'aiguillage 83, et des autres IT (à l'exception de l'$IT_0$) qui sont dirigés vers un second circuit d'aiguillage 84.

Le dispositif comporte en outre une base de temps générale 85 qui reçoit le signal $H_R$ et le signal de synchronisation trame 30 voies fourni par le circuit 81 ; la base de temps 85 fournit des signaux de synchronisation aux aiguillages 83 et 84 ainsi qu'un signal de synchronisation trame 10 voies à un dispositif 86 d'élaboration des motifs de synchronisation VT et VMT 10 voies. Les trois sorties de chacun des circuits 83, 84, 86 sont réunies respectivement à trois circuits logiques OU, 87, 88 et 89 fournissant chacun les trames 10 voies reconstituées. Comme précédemment, ils sont éventuellement suivis par des dispositifs de mise en forme.

La description ci-dessus n'a été faite qu'à titre d'exemple non limitatif, et les variantes à la portée de l'homme du métier entrent bien entendu dans le cadre de l'invention. C'est ainsi notamment que l'invention s'applique en général au multiplexage d'un nombre N de voies qui peut être différent de dix. De même, le codeur (31) et le décodeur (41), représentés comme étant communs à toutes les voies, peuvent être répartis au niveau de chacune des voies.

## Revendications

1. Procédé de multiplexage temporel de 30 voies d'informations sur un même support de transmission, dans lequel les informations à transmettre sont codées sous forme de mots binaires (IT), réunis en trame (T) et multitrames (MT), une trame comportant une série de mots binaires représentant les informations à transmettre et des bits auxiliaires représentant au moins des informations de synchronisation et de signalisation, une multitrame comportant une série de trames successives, ledit procédé étant caractérisé par le fait qu'à chacune des 30 voies correspond une voie d'un parmi trois systèmes de N = 10 voies selon le tableau ci-dessous:

| | N° de voie d'un système à 10 voies | | | | | | | | | |
|---|---|---|---|---|---|---|---|---|---|---|
| | 1 | 2 | 3 | 4 | 5 | 6 | 7 | 8 | 9 | 10 |
| **N° de voie d'un système à 30 voies** | | | | | | | | | | |
| 1er système 10 voies | 1 | 4 | 7 | 10 | 13 | 16 | 19 | 22 | 25 | 28 |
| 2e système 10 voies | 2 | 5 | 8 | 11 | 14 | 17 | 20 | 23 | 26 | 29 |
| 3e système 10 voies | 3 | 6 | 9 | 12 | 15 | 18 | 21 | 24 | 27 | 30 |

que, pour chaque système 10 voies, chaque trame comporte 11 mots binaires (IT) de même longueur, seul le premier d'entre eux (ITo) comprenant les bits auxiliaires, les mots suivants représentant respectivement un échantillon codé des informations à transmettre sur chacune des voies; et que pour chaque multitrame (MT), le premier mot (ITo) des trames (T) de rang pair ($T_1, T_3 \ldots T_{15}$) porte les informations de synchronisation (VT), les informations de signalisation (S) des voies étant portées par le premier mot (ITo) des trames (T) de rang impair ($T_2, T_4, T_8, T_{10}, T_{14}$) et étant regroupées deux par deux, de la forme $S_i$ et $S_{i+(N/2)}$ si S désigne l'information de signalisation et i le rang de la voie à laquelle il se rapporte.

2. Procédé de multiplexage temporel selon la revendication 1, caractérisé par le fait qu'une multitrame de système 10 voies comporte 16 trames.

3. Procédé de multiplexage temporel selon l'une des revendications précédentes, caractérisé par le fait qu'un mot (IT) comporte 8 bits.

4. Procédé de multiplexage temporel selon les revendications précédentes, caractérisé par le fait que, pour chaque système 10 voies, pour chaque multitrame (MT), le premier mot $IT_0$) de la première trame $T_0$) comporte une information de synchronisation multitrame (VMT); que tous les premiers mots ($IT_0$) des trames de rang pair comportent la même information de synchronisation (VT) trame, et que les premiers mots des trames de rang impair restantes portent les informations de signalisation de la façon suivante:

— troisième trame ($T_2$), signalisation des voies 1 et 6;
— cinquième trame ($T_4$), signalisation des voies 2 et 7;
— neuvième trame ($T_8$), signalisation des voies 3 et 8;
— onzième trame ($T_{10}$), signalisation des voies 4 et 9;
— quinzième trame, ($T_{14}$), signalisation des voies 5 et 10.

5. Procédé de multiplexage temporel selon l'une des revendications précédentes, caractérisé par le fait que, pour chaque système 10 voies, dans chaque multitrame, les premiers mots des trames impaires non utilisés pour les informations de signalisation représentent des informations numériques basse vitesse et/ou des informations de service.

6. Dispositif de multiplexage pour la mise en oeuvre du procédé selon l'une des revendications précédentes, assurant le multiplexage de trois systèmes 10 voies pour former un système 30 voies, caractérisé par le fait qu'il comporte, pour chacun des systèmes 10 voies, des moyens (53, 63, 73) de détection des informations trame et multitrame et de génération d'un signal de synchronisation trame, et des moyens d'extraction (54, 55; 64, 65; 74, 75) et de mémorisation (56, 57; 66, 67; 76, 77) d'une part des informations de synchronisation et d'autre part des informations à transmettre; le dispositif comportant en outre des moyens (58) de mise en phase des multitrames des trois systèmes 10 voies, auxquels sont reliés les moyens d'extraction précédents, et un circuit constituant une base de temps (59) fournissant, à partir de signaux d'horloge et de synchronisation d'un système 30 voies, des signaux de synchronisation au reste du dispositif, assurant le séquencement des informations des trois systèmes 10 voies pour former le système 30 voies.

7. Dispositif selon la revendication 6, caractérisé par le fait qu'il comporte, pour chacun des systèmes 10 voies, un dispositif de multiplexage temporel de N = 10 voies d'informations sur un même support, comportant:

— des moyens (33) de génération des fréquences correspondant respectivement à la fréquence trame et à celle des mots;
— un circuit constituant une base de temps (34), fournissant à partir des fréquences précédentes des signaux de synchronisation au reste du dispositif;
— des moyens (35) d'élaboration du premier mot de chaque trame, recevant les signaux de synchronisation précédents et les informations de signalisation;
— des moyens d'aiguillage (32) recevant, en parallèle, les N mots binaires représentant les N voies d'informations à transmettre ainsi que les N informations de signalisation correspondantes, et fournissant, sur commande (37, 38) de la base de temps (34), les informations de signalisation en série aux moyens (35) d'élaboration du premier mot de chaque trame, qui fournit le premier mot élaboré à des moyens (36) de mise en forme commandés par les moyens (33) de génération de fréquence et les informations à transmettre en série à ces mêmes moyens (36) de mise en forme.

8. Dispositif de démultiplexage pour la mise en oeuvre du procédé selon l'une des revendications 1 à 5 assurant le démultiplexage d'un système 30 voies pour former trois systèmes 10 voies, caractérisé par le fait qu'il comporte:

— des moyens (81) de détection des informations de synchronisation trame et multitrame;
— des moyens (82) d'extraction d'une part des informations de signalisation et d'autre part des informations à transmettre;
— deux circuits d'aiguillage (83, 84), recevant respectivemant les informations de signalisation et les informations à transmettre des moyens (82) précédents;
— des moyens (86) d'élaboration des informations de synchronisation trame et multitrame des systèmes 10 voies;
— un circuit (85) constituant une base de temps, fournissant, à partir de l'information de synchronisation trame et de la fréquence correspondant au débit du support, des signaux de synchronisation au reste du dispositif et assurant le séquencement des informations fournies.

9. Dispositif selon la revendication 8, caractérisé par le fait qu'il comporte, pour chacun des systèmes 10 voies, un dispositif de démultiplexage temporel de N = 10 voies d'informations, comportant:

— des moyens (43) de génération des fréquences correspondant respectivement au débit du support,

11

à la fréquence trame et à celle des mots, à partir du rythme de transmission récupéré;

— des moyens (42, 44) de détection des informations de synchronisation trame et multitrame;

— un circuit constituant une base de temps (46) recevant les signaux d'horloge et de synchronisation précédents, et fournissant des signaux de synchronisation au reste du dispositif;

— des moyens d'extraction (45) et de démultiplexage (48) du premier mot de chaque trame, fournissant les informations de signalisation.

## Patentansprüche

1. Verfahren zur Zeitmultiplexierung von 30 Informationskanälen auf einem gemeinsamen Übertragungsträger, auf dem die zu übertragenden Informationen in Form von Binärwörtern (IT) kodiert sind, wobei diese Wörter zu Rahmen (T) und Vielfachrahmen (MT) zusammengefaßt sind, derart, daß ein Rahmen eine Reihe von die zu übetragenden Binärwörter darstellenden Informationen und Hilfsbits enthält, die mindestens Synchronisations- und Signalisationsinformationen darstellen, während ein Vielfachrahmen eine Reihe von aufeinanderfolgenden Rahmen enthält, dadurch gekennzeichnet, daß jedem der 30 Kanäle ein Kanal aus einem von drei Systemen mit je N = 10 Kanälen gemäß der nachfolgenden Tabelle entspricht:

| | Kanalnummer eines 10-Kanalsystems | | | | | | | | | |
|---|---|---|---|---|---|---|---|---|---|---|
| | 1 | 2 | 3 | 4 | 5 | 6 | 7 | 8 | 9 | 10 |
| **Kanalnummer eines 30-Kanalsystems** | | | | | | | | | | |
| 1. 10-Kanalsystem | 1 | 4 | 7 | 10 | 13 | 16 | 19 | 22 | 25 | 28 |
| 2. 10-Kanalsystem | 2 | 5 | 8 | 11 | 14 | 17 | 20 | 23 | 26 | 29 |
| 3. 10-Kanalsystem | 3 | 6 | 9 | 12 | 15 | 18 | 21 | 24 | 27 | 30 |

daß für jedes 10-Kanalsystem jeder Rahmen elf Binärwörter (IT) gleicher Länge enthält, von denen nur der erste (ITo) die Hilfsbits enthält, während die folgenden Wörter je eine kodierte Probe der zu übertragenden Informationen auf jedem der Kanäle darstellen, und daß für jeden Vielfachrahmen (MT) das erste Wort (ITo) der Rahmen (T) gerader Ordnung ($T_1$, $T_3$, ... $T_{15}$) die Synchronisationsinformationen (VT) trägt, während die Signalisationsinformationen (S) der Kanäle im ersten Wort (ITo) der Rahmen (T) ungeradzahliger Ordnung ($T_2$, $T_4$, $T_8$, $T_{10}$, $T_{14}$) enthalten und je zu zweien gemäß der Form $S_i$ und $S_{i+N/2}$ gruppiert sind, wobei S die Signalisationsinformation und i die Ordnungszahl des Kanals bezeichnet, auf den die Information sich bezieht.

2. Verfahren zur Zeitmultiplexierung nach Anspruch 1, dadurch gekennzeichnet, daß ein Vielfachrahmen des 10-Kanalsystems 16 Rahmen enthält.

3. Verfahren zur Zeitmultiplexierung nach einem der vorhergehenden Ansprüche, dadurch gekennzeichnet, daß ein Wort (IT) acht Bits enthält.

4. Verfahren zur Zeitmultiplexierung nach den vorhergehenden Ansprüchen, dadurch gekennzeichnet, daß für jedes 10-Kanalsystem in jedem Vielfachrahmen (MT) das erste Wort (ITo) des ersten Rahmens (To) eine Vielfachrahmen-Synchronisationsinformation (VMT) enthält, daß alle ersten Wörter (ITo) der geradzahligen Rahmen die gleiche Rahmensynchronisationsinformation (VT) enthalten und daß die ersten Wörter der restlichen ungeradzahligen Rahmen die Signalisationsinformation in folgender Form tragen:

— der dritte Rahmen ($T_2$) die Signalisation der Kanäle 1 bis 6,
— der fünfte Rahmen ($T_4$) die Signalisation der Kanäle 2 bis 7,
— der neunte Rahmen ($T_8$) die Signalisation der Kanäle 3 und 8,
— der elfte Rahmen ($T_{10}$) die Signalisation der Kanäle 4 und 9,
— der fünfzehnte Rahmen ($T_{14}$) die Signalisation der Kanäle 5 und 10.

5. Verfahren zur Zeitmultiplexierung nach einem der vorhergehenden Ansprüche, dadurch gekennzeichnet, daß für jedes 10-Kanalsystem in jedem Vielfachrahmen die ersten Wörter der ungeradzahligen Rahmen, die nicht für die Signalisationsinformationen benutzt werden, digitale Informationen niedriger Geschwindigkeit und/oder Dienstinformationen darstellen.

6. Vorrichtung zur Multiplexierung für die Durchführung des Verfahrens nach einem der vorhergehenden Ansprüche, mit der die Multiplexierung von drei 10-Kanalsystemen bewirkt wird, um ein 30-Kanalsystem zu bilden, dadurch gekennzeichnet, daß sie für jedes der 10-Kanalsysteme Mittel (53, 63, 73) für die Entdeckung der Rahmen- und Vielfachrahmeninformationen sowie zur Erzeugung eines Rahmensynchronisationssignals sowie Mittel zur Entnahme (54, 55; 64, 65; 74, 75) und zur Speicherung (56, 57; 66, 67; 76, 77) der Synchronisationsinformationen auf der einen Seite und der zu übertragenden Informationen auf der anderen Seite enthält und daß die Vorrichtung außerdem Mittel (58) enthält, mit der die Vielfachrahmen der drei 10-Kanalsysteme in Phase gebracht werden und an die die genannten Mittel zur Entnahme angeschlossen sind, und daß die Vorrichtung schließlich einen eine Zeitbasis bildenden Schaltkreis (59) enthält, der ausgehend von Takt- und Synchronisationssignalen eines 30-Kanalsystems Synchronisationssignale an den Rest der Vorrichtung liefert und den zeitlichen Ablauf der Informationen der drei 10-Kanalsysteme zur Bildung des 30-Kanalsystems sichert.

7. Vorrichtung nach Anspruch 6, dadurch gekennzeichnet, daß sie für jedes der 10-Kanalsysteme eine Vorrichtung zur Zeitmultiplexierung von N = 10 Informationskanälen auf einem gemeinsamen Träger enthält, die aufweist:

— Mittel (33) zur Erzeugung der der Rahmenfrequenz bzw. der Wörterfrequenz entsprechenden Frequenz,
— einen eine Zeitbasis (34) bildenden Schaltkreis, der ausgehend von den genannten Frequenzen Synchronisationssignale an den Rest der Vorrichtung liefert,
— Mittel (35) zur Erarbeitung des ersten Wortes jedes Rahmens, denen die vorgenannten Synchronisationssignale und die Signalisationsinformationen zugeführt werden,
— und Weichenmittel (32), die in paralleler Form die N Binärwörter, die die N zu übertragenden Informationskanäle darstellen, sowie die N entsprechenden Signalisationsinformationen zugeführt erhalten und unter Steuerung (37, 38) durch die Zeitbasis (34) die Signalisationsinformationen in Reihe an die Mittel (35) zur Ausarbeitung des ersten Worts jedes Rahmens liefern, die wiederum das erarbeitete erste Wort an Formgebungsmittel (36) senden, die von den Mitteln (33) zur Frequenzerzeugung gesteuert werden, und die zu übertragenden Informationen in Reihe an dieselben Formgebungsmittel (36) liefern.

8. Demultiplexiervorrichtung für die Durchführung des Verfahrens nach einem der Ansprüche 1 bis 5 und zur Demultiplexierung eines 30-Kanalsystems, um daraus wieder drei 10-Kanalsysteme zu bilden, dadurch gekennzeichnet, daß sie aufweist:

— Mittel (81) zur Erkennung der Rahmen- und Vielfachrahmensynchronisationsinformationen,
— Mittel (82) zur Entnahme einerseits der Signalisationsinformationen und andererseits der zu übertragenden Informationen,
— zwei Weichenschaltkreise (83, 84), die die Signalisationsinformationen bzw. die zu übertragenden Informationen von den vorhergehend genannten Mitteln (82) zugeführt erhalten,
— Mittel (86) zur Erarbeitung der Rahmen- und Vielfachrahmensynchronisationsinformationen der 10-Kanalsysteme,
— einen eine Zeitbasis bildenden Schaltkreis (85), der ausgehend von den Rahmensynchronisationsinformationen und von der der Bitrate des Trägers entsprechenden Frequenz Synchronisationssignale an den Rest der Vorrichtung liefert und die zeitliche Abfolge der gelieferten Informationen sicherstellt.

9. Vorrichtung nach Anspruch 8, dadurch gekennzeichnet, daß sie für jedes 10-Kanalsystem eine Vorrichtung zur Zeitdemultiplexierung von zehn Informationskanälen besitzt und aufweist:

— Mittel (43) zur Erzeugung der der Bitrate des Trägers, der Rahmenfrequenz und der Wortfrequenz entsprechenden Frequenzen ausgehend vom wiederhergestellten Übertragungsrhythmus,
— Mittel (429, 44) zur Erkennung der Rahmen- und Vielfachrahmensynchronisationsinformationen,
— einen eine Zeitbasis (46) bildenden Schaltkreis, der die vorerwähnten Takt- und Synchronisationssignale zugeführt erhält und Synchronisationssignale an die übrige Vorrichtung liefert,
— Mittel zur Entnahme (45) und zur Demultiplexierung (48) des ersten Worts jedes Rahmens, die die Signalisationsinformationen liefern.

**Claims**

1. A method for the time multiplexing of 30 information channels on a common transmission support in which the informations which are to be transmitted are coded in binary words (IT) and arranged in frames (T) and multiframes (MT), one frame comprising a series of binary words representing the informations which are to be transmitted and auxiliary bits representing at least synchronization and signalling informations one multiframe comprising a serie of successive frames, said method being characterized

13

in that any one channel from one out of three systems including each $N = 10$ channels corresponds to one of the 30 channels according to the following table:

| Channel number of a 10-channels system | | | | | | | | | |
|---|---|---|---|---|---|---|---|---|---|
| 1 | 2 | 3 | 4 | 5 | 6 | 7 | 8 | 9 | 10 |

| Channel number of a 30-channels system | | | | | | | | | |
|---|---|---|---|---|---|---|---|---|---|
| 1st 10-channels system | 1 | 4 | 7 | 10 | 13 | 16 | 19 | 22 | 25 | 28 |
| 2nd 10-channels system | 2 | 5 | 8 | 11 | 14 | 17 | 20 | 23 | 26 | 29 |
| 3rd 10-channels system | 3 | 6 | 9 | 12 | 15 | 18 | 21 | 24 | 27 | 30 |

that, in each 10-channels system, each frame includes eleven binary word (IT) having identical length, only the first one (ITo) comprising the auxiliary bits, the following words representing respectively one coded sample of the informations which are to be transmitted on any one of the channels, and that for each multiframe (MT), the first word (ITo) of the frames (T) of even rank $(T_1, T_3, \ldots T_{15})$ bears the synchronization informations (VT), the signalling informations (S) of the channels being borne by the first word (ITo) of the frames (T) of odd rank $(T_2, T_4, T_8, T_{10}, T_{14})$ and being arranged in pairs of the form $S_i$ and $S_{i+N/2}$ with S representing the signalling information and i the rank of the channel to which it refers.

2. A method for the time multiplexing according to claim 1, characterized in that one multiframe of the 10-channels system comprises 16 frames.

3. A method for the time multiplexing according to one of the preceding claims, characterized in that one word (IT) includes eight bits.

4. A method for the time multiplexing according to the preceding claims, characterized in that, for each 10-channels system and for each multiframe (MT), the first word (ITo) of the first frame (To) includes a multiframe synchronization information (VMT), that all the first words (ITo) of the frames of even rank include the same frame synchronization information (VT) and that the first words of the remaining frames of even rank bear the signalling information according to the following scheme:

- the third frame $(T_2)$ bears the signallisation of the channels 1 and 6,
- the fifth frame $(T_4)$ bears the signallisation of the channels 2 and 7,
- the nineth frame $(T_8)$ bears the signallisation of the channels 3 and 8,
- the eleventh frame $(T_{10})$ bears the signallisation of the channels 4 and 9,
- the fifteenth frame $(T_{14})$ bears the signallisation of the channels 5 and 10.

5. A method for the time multiplexing according to one of the preceding claims, characterized in that, for each 10-channels system and each multiframe, the first words of the odd frames which are not used for the signalling informations represent digital informations of low speed and/or service informations.

6. A device for the multiplexing and for implementing the method according to one of the preceding claims, ensuring the multiplexing of three 10-channels systems in order to create a 30-channels system, characterized in that it comprises, for each one of the 10-channels system, means (53, 63, 73) for detecting frame and multiframe informations and for generating a frame synchronization signal, and means for extracting (54, 55; 64, 65; 74, 75) and for storing (56, 57; 66, 67; 76, 77) on the one hand synchronization informations and on the other hand the informations which are to be transmitted, the device further including means (58) for getting the multiframes of the three 10-channels systems in phase, the said extraction means being connected thereto, and comprising a circuit (59) constituting a time base and furnishing, under the control of clock and synchronization signals of a 30-channels system, synchronization signals to the remaining device, thus arranging the sequence of the informations of the three 10-channels systems in order to create the 30-channels system.

7. A device according to claim 6, characterized in that it comprises, for each one of the 10-channels system, a device for the time multiplexing of $N = 10$ informations channels on a common support, comprising:

- means (33) for generating frequencies corresponding respectively to the frame frequency and to the word frequency,
- a circuit constituting a time base (34) and generating from the preceding frequencies synchronization signals to the remaining device,

14

— means (35) for elaborating the first words of each frame, receiving the preceding synchronization signal and the signalling informations,

— branching means (32) receiving parallelly the N binary words representing the N channels of informations to be transmitted as well as the N corresponding signalling informations and delivering, under the control (37, 38) of the time base (34), the signalling informations in series to the means (35) for elaborating the first word of each frame, these means furnishing the first elaborated word to conditioning means (36) which are controlled by the means (33) for frequency generation, and delivering the informations which are to be treansmitted in series to these said conditioning means (36).

8. A demultiplexing device for implementing the method according to one of the claims 1 to 5, ensuring the demultiplexing of a 30-channels system in order to constitute three 10-channels systems, characterized in that it comprises:

— means (81) for detecting the frame and multiframe synchronization informations,

— means (82) for extracting on the one hand the signalling informations and on the other hand the informations which are to be transmitted,

— two branching circuits (83, 84) receiving from the preceding means (82) the signalling information and the informations respectively which are to be transmitted,

— means (86) for elaborating the frame and multiframe synchronization informations of the 10-channels systems,

— a circuit (85) constituting a time base and generating, from the frame synchronization informations and from the frequency corresponding to the bit rate of the support, synchronization signals for the remaining device ensuring the sequential arrangement of the delivered information.

9. A device according to claim 8, characterized in that it comprises for each one of the 10-channels systems a device for time division demultiplexing N = 10 informations channels, this device comprising:

— means (43) for generating frequencies corresponding respectively to the bit rate of the support, to the frame frequency and to the word frequency as a function of the recuperated transmission rythm,

— means (42, 44) for detecting the frame and multiframe synchronization informations,

— a circuit which constitutes a time base (46) and receives the preceding clock and synchronization signals, this circuit furnishing synchronization signals to the remaining device,

— means for extracting (45) and demultiplexing (48) the first word of each frame, these means delivering the signalling informations.

0 077 252

# FIG_1

MTi-1     MTi     MTi+1

$T_0$    ---    $T_6$    ---    $T_{15}$

$IT_0$    --    $IT_{10}$    --    $IT_{16}$    ---    $IT_{31}$

$B_0$     $B_7$

# FIG_2

MTi-1     MTi     MTi+1

$T_0$    ---    $T_6$    ---    $T_{15}$

$IT_0$    --    $IT_4$    ---    $IT_{10}$

$B_0$     $B_7$

# FIG_3

0 077 252

FIG_4

FIG_5

# FIG_6

SYSTEME
30 VOIES

R

T

81 DETECTION VT, VMT

HR

82 EXTRACTION IT₁₆

IT₁₆

IT₁₋₁₅, ₁₇₋₃₁

83 AIGUILLAGE IT₁₆

84 AIGUILLAGE IT₁₋₁₅, ₁₇₋₃₁

85 BASE DE TEMPS

86 ELABORATION VT, VMT

87 OU → 1ᵉʳ syst. 10 VOIES

88 OU → 2ᵉ syst. 10 VOIES

89 OU → 3ᵉ syst. 10 VOIES

0 077 252